(19) Europäisches Patentamt
European Patent Office
Office européen des brevets

(11) Publication number: 0 083 831
B1

# (12) EUROPEAN PATENT SPECIFICATION

(45) Date of publication of patent specification: 24.07.85

(51) Int. Cl.[4]: C 01 C 1/02, C 01 B 17/74

(21) Application number: 82301590.4

(22) Date of filing: 25.03.82

## (54) Process for producing sulfuric acid and ammonia.

(30) Priority: 05.01.82 IL 64712

(43) Date of publication of application:
20.07.83 Bulletin 83/29

(45) Publication of the grant of the patent:
24.07.85 Bulletin 85/30

(84) Designated Contracting States:
AT BE DE FR GB IT NL SE

(56) References cited:
CH-A- 477 367
FR-A-2 075 207
FR-A-2 141 794
FR-A-2 370 694
US-A-3 383 170

(73) Proprietor: Fertilizer Development S.A.
44, Avenue de la Gare Case Postale 898
Lausanne (CH)

(72) Inventor: Baniel, Abraham M.
8, Emile Zola Street
Jerusalem (IL)
Inventor: Eyal, Arie M.
Kibbutz Ramat Rachel, 90900 (IL)

(74) Representative: Whalley, Kevin et al
Marks & Clerk 57/60 Lincoln's Inn Fields
London WC2A 3LS (GB)

EP 0 083 831 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for producing sulfuric acid and ammonia. More particularly, the present invention relates to a process for the recovery of sulfuric acid and ammonia from diammonium sulfate and to the possible further commercial utilization thereof in a unitary continuous process.

As is known, diammonium sulfate is obtained in large quantities as a by-product of a number of manufacturing processes, e.g. in the manufacture of caprolactam, acrylic acid and similar products.

Although diammonium sulfate is utilizable as a fertilizer, the disposal of diammonium sulfate produced as a by-product of such manufacturing process is difficult in many cases due to the distances between such manufacturing sites and the potential markets for such fertilizer material. As a result great efforts are expended on recycling diammonium sulfate by converting it to sulfuric acid and ammonia.

Thus in DE—A—2 130 036 and the corresponding FR—A—2 141 734 diammonium sulfate is first heated to convert it to ammonium hydrogen sulfate and $NH_3$ whereby half of the ammonia is recovered. Next the ammonium hydrogen sulfate is pyrolyzed with a hydrocarbon oil at 1040°C whereby the remaining half of the $NH_3$ is destroyed but the sulfur content is recovered in the form of $SO_2$ which can be reoxidized to sulfuric acid.

The very complexity of the above prior art process serves in itself to illustrate and emphasize the fact that thermal dissociation of diammonium sulfate to $NH_3$ and $H_2SO_4$ is not readily achievable beyond the stage of production of ammonium hydrogen sulfate. Therefore the known prior art processes all have recourse to severe decomposition reactions whereby ammonium hydrogen sulfate is reduced to $SO_2$ with the loss of 50% of the $NH_3$ of the initial diammonium sulfate. This is clearly an onerous procedure.

There is therefore a need for an effective process that recovers the totality of $NH_3$ and of $H_2SO_4$ (without going through a reduction-oxidation sequence) in addition to providing a better solution to the disposal of by-product diammonium sulfate.

The present invention provides a process for the recovery of sulfuric acid and ammonia from diammonium sulfate, comprising the steps of:

(a) heating diammonium sulfate to a temperature sufficient to effect the thermal decomposition of diammonium sulfate to ammonium hydrogen sulfate and ammonia;

(b) introducing the resulting ammonium hydrogen sulfate into a solution comprising about 10 to about 45 weight percent $H_2O$, about 41 to 74 weight percent $SO_4^{=}$, about 0.1 to 0.7 weight percent $H^+$ and about 13.5 to 15.5 weight percent $NH_4^+$ to form a charged brine;

(c) contacting the charged brine with a solvent which is substantially water immiscible and which extracts $H_2SO_4$ preferentially over ammonium sulfates whereby $H_2SO_4$ is selectively extracted from the brine and ammonium sulfate solids having molar ratios of $NH_4^+$ to $SO_4^{=}$ ranging from above 1:1 to about 2:1 crystallize out of solution; and

(d) extracting the solvent loaded with $H_2SO_4$ with water to obtain a solution of sulfuric acid.

As will be realized the present invention provides a simple process for producing sulfuric acid and ammonia from diammonium sulfate and is readily amenable to continuous operation with the regeneration and recycling of the components of the process.

Thus, in preferred embodiments of the present invention, the crystallized ammonium sulfate solids from the step(c) can be separated from the brine and recycled for thermal decomposition according to the step(a), the brine remaining from the step(c) can be recycled for use in the step(b), and the washed solvent remaining after the step(d) can be recycled for use in the step(c).

The first step(a) of the process of the present invention is known and can be carried out in several ways known in the art. In addition to the above-mentioned German specification, this step is specifically described in U.S. Patent No. 3 674 427 and the corresponding FR—A—2 075 207 and in FR—A—2 370 694 amongst others. In all cases gaseous $NH_3$ and ammonium hydrogen sulfate are obtained at temperatures of about 250° to about 450°, preferably at temperatures of about 350° to 450°.

In the second step(b) of the process of the present invention the liquid ammonium hydrogen sulfate is fed into a reactor containing a solution comprising $H_2O$, $SO_4^{=}$, $H^+$ and $NH_4^+$, preferably in amounts of about 10 to about 30 weight percent $H_2O$, about 58 to 74 weight percent $SO_4^{=}$, about 0.3 to 0.7 weight percent $H^+$ and about 14 to 15 weight percent $NH_4^+$.

The high temperature of the liquid ammonium hydrogen sulfate leaving the thermal decomposition stage permits easy control of the temperature of the solution which is obtained which may lose heat in subsequent operations. The temperature of operation is not critical and can be selected within a broad range. Generally temperatures higher than 10°C and lower than the boiling temperature of the brine (110°—130°) are practical, with temperatures of 70°C to 110°C being generally preferred. Furthermore the temperature need not be kept constant and a decrease of temperature will take place on contact with the solvent of the step(c).

The solvent used for selectively extracting sulfuric acid can be any solvent for $H_2SO_4$ that is not water miscible and substantially does not extract ammonium sulfates. Alcohols, e.g. pentanol, and many other oxygenated and non-oxygenated solvents satisfy this requirement. Naturally in each case extraction conditions must be adjusted to stability requirements of the chosen solvent. The class of solvents described in U.S. Patent No. 4 291 007 is particularly suitable for this purpose.

Thus an especially preferred solvent system for use in the present process comprises:

(i) a strong organic acid, which acid is oil soluble and substantially water immiscible both in free and in salt form;

(ii) an oil soluble amine, which amine is substantially water immiscible both in free and in salt form; and

(iii) a carrier solvent for the organic acid and the amine, wherein the molar ratio of the organic acid to the amine is from about 1:4 to 4:1.

The process of the present invention has many valuable commercial applications including those wherein the process can successfully and advantageously be incorporated as part of a broader unitary commercial process.

To illustrate this there may be considered the manufacture of phosphoric acid by the so-called wet process. For every ton of $P_2O_5$ recovered through the acidulation of phosphate rock by sulfuric acid some 4 tons of by-product calcium sulfate (generally gypsum) must be disposed of. This is costly and presents serious environmental problems. Through the application of the present invention sulfuric acid may be recovered from the gypsum and recycled to phosphoric acid manufacture by a sequence of operations represented by the equations below:

$$CaSO_4+2NH_3+CO_2+H_2O=CaCO_3+(NH_4)_2SO_4$$

$$(NH_4)_2SO_4=H_2SO_4+2NH_3.$$

These equations indicate that concurrently with sulfuric acid recovery calcium sulfate is converted into environmentally innocuous calcium carbonate (the ammonia serves an auxiliary function only).

Thus the present invention in one of its preferred aspects relates to a process wherein the diammonium sulfate, from which the ammonia and sulfuric acid are produced, is itself first produced by reacting by-product calcium sulfate from phosphoric acid manufacture with ammonia and carbon dioxide to produce calcium carbonate and diammonium sulfate, whereafter following the process of the present invention the recovered sulfuric acid is used in a manufacturing process for phosphoric acid, which later process results in the production of the calcium sulfate by-product, and the ammonia produced in the step(a) is recycled for reaction with the calcium sulfate by-product.

The invention will be further described with reference to the following illustrative Examples.

Example 1

264 Grams of solid diammonium sulfate were fed to a reactor maintained at a temperature of about 400°C in which thermal decomposition of the diammonium sulfate occurred producing 34 grams of gaseous ammonia and 230 grams of liquid ammonium hydrogen sulfate. The ammonia gas was vented and recovered and the liquid ammonium hydrogen sulfate was fed into a second reactor containing a solution comprising about 10.5 weight percent $H_2O$, 73.7 weight percent $SO_4^{=}$, 0.7 weight percent $H^+$, and 15.1 weight percent $NH_4^+$ to form a charged brine solution which was maintained at a temperature of about 80°C. The charged brine was then contacted with 12 liters of a solvent prepared by mixing methyl tricaprylyl ammonium chloride (sold by Henkel as Aliquat 336) and dinonyl naphthalene sulfonic acid (sold by King Industries as Synex DN-052) in aromatics-free white spirit to give 0.25M concentration of each (this solvent was washed with water in order to wash away the HCl prior to use). In the single liquid-liquid contact, the solvent took up 98 grams of $H_2SO_4$ and, simultaneously, solids containing 132 grams of diammonium sulfate crystallized out in the aqueous phase. The loaded solvent was then separated from the aqueous slurry and was further extracted with water in four counter current stages to obtain a 30% solution of $H_2SO_4$.

Example 2

The aqueous slurry formed in Example 1 was separated by centrifugation or filtration to obtain a recycle brine and a wet cake containing 132 grams of diammonium sulfate. The wet cake was then mixed with 132 grams of solid diammonium sulfate for thermal decomposition as carried out in Example 1. The recycle brine obtained from the centrifugation or filtration was then recycled for combination with the ammonium hydrogen sulfate formed from the thermal decomposition as described in Example 1 to reform a charged brine.

Furthermore, the solvent exiting from the counter current extraction of Example 1 was also recycled into the process described in Example 1 for recontacting with the charged brine.

The net result was the decomposition of 132 grams of diammonium sulfate to 98 grams $H_2SO_4$ and 34 grams $NH_3$ and the regeneration of brine, washed solvent and recycle diammonium sulfate, ready for reuse in a further identical cycle.

Thus the present example also illustrates the amenability of the present process to continuous operation.

As will be realized the above exemplified system is self correcting with respect to the quantities of $H_2SO_4$ and diammonium sulfate obtained in every cycle so that they tend to satisfy the equation:

$$2NH_4HSO_4=(NH_4)_2SO_4+H_2SO_4.$$

If due to fluctuations in operating conditions more $H_2SO_4$ is extracted than the equivalent to the diammonium sulfate precipitated then the composition of the recycle brine will automatically adjust itself so that in the subsequent cycle relatively less $H_2SO_4$ will be extracted until the ratio corrects itself.

Example 3

This example illustrates the applicability of the

present invention to the production of phosphoric acid from phosphoric rock.

A sulfuric acid obtained in Example 2, 98 grams, was concentrated to 98 weight percent and then used to attack 115 grams of Florida phosphate rock. The slurry thus obtained was filtered and washed. An aqueous phase containing 32 grams of $P_2O_5$ and a filter cake containing 136 grams of calcium sulfate were formed. This cake was reacted with the 34 grams of ammonia obtained in Example 2 and the required $CO_2$ (44 grams) and water according to established industrial processes. A solid phase containing 100 grams of calcium carbonate and an aqueous phase containing 132 grams of diammonium sulfate were obtained. After phase separation the water from the aqueous phase was evaporated and 132 grams of diammonium sulfate crystallized. The solid was treated as in Example 2 and 98 grams of sulfuric acid and 34 grams of ammonia were recovered. In the overall process an aqueous phase containing 32 grams of $P_2O_5$ and a solid phase containing 100 grams of calcium carbonate were obtained from 115 grams of phosphate rock and 44 grams of $CO_2$. Thus, in effect, the net result consisted of the attack of phosphate rock by $CO_2$ to obtain phosphoric acid and calcium carbonate.

## Claims

1. A process for the recovery of sulfuric acid and ammonia from diammonium sulfate, comprising

(a) heating diammonium sulfate to a temperature sufficient to effect the thermal decomposition of diammonium sulfate to ammonium hydrogen sulfate and ammonia, and characterized by the further steps of:

(b) introducing the resulting ammonium hydrogen sulfate into a solution comprising 10 to 45 weight percent $H_2O$, 41 to 74 weight percent $SO_4^=$, 0.1 to 0.7 weight percent $H^+$ and 13.5 to 15.5 weight percent $NH_4^+$ to form a charged brine;

(c) contacting the said charged brine with a solvent which is substantially water immiscible and which extracts $H_2SO_4$ preferentially over ammonium sulfates whereby $H_2SO_4$ is selectively extracted from the said brine and ammonium sulfate solids having molar ratios of $NH_4^+$ to $SO_4^=$ ranging from above 1:1 to about 2:1 crystallize out of solution; and

(d) extracting the solvent loaded with $H_2SO_4$ with water to obtain a solution of sulfuric acid.

2. A process as claimed in claim 1, characterized in that the crystallized ammonium sulfate solids from the step(c) are separated from the said brine and recycled for thermal decomposition according to the step(a).

3. A process as claimed in claim 1 or 2, characterized in that the brine remaining from the step(c) is recycled for use in the step(b).

4. A process as claimed in any of claims 1 to 3, characterized in that the washed solvent remaining after the step(d) is recycled for use in the step(c).

5. A process as claimd in any of claims 1 to 4, characterized in that the said thermal decomposition of diammonium sulfate is effected at a temperature of 250°C to 450°C.

6. A process as claimed in any of claims 1 to 5, characterized in that the ammonium hydrogen sulfate is contacted with the said brine in the step(b) at a temperature between 10°C and 130°C.

7. A process as claimed in any of claims 1 to 6, characterized in that the said solvent utilized in the step(c) comprises (i) a strong organic acid which is oil soluble and substantially water immiscible both in free and in salt form, (ii) an oil soluble amine which is substantially water immiscible both in free and in salt form, and (iii) a carrier solvent for the said organic acid and the said amine, and in that the molar ratio of the said organic acid to the said amine is 1:4 to 4:1.

8. A process as claimed in any of claims 1 to 7, characterized in that the said recycled brine comprises 10 to 30 weight percent $H_2O$, 58 to 74 weight percent $SO_4^=$, 0.3 to 0.7 weight percent $H^+$ and 14 to 15 weight percent $NH_4^+$.

9. A process as claimed in any of claims 1 to 8, characterized in that the said diammonium sulfate is produced by reacting by-product calcium sulfate from phosphoric acid manufacture with ammonia and carbon dioxide to produce calcium carbonate and diammonium sulfate.

10. A process as claimed in claim 9, characterized by the further utilization of the recovered sulfuric acid in a manufacturing process for phosphoric acid, which said process results in the production of the said calcium sulfate by-product.

## Patentansprüche

1. Verfahren zur Rückgewinnung von Schwefelsäure und Ammoniak aus Diammoniumsulfat, welches

(a) Erhitzen des Diammoniumsulfates auf eine Temperatur, die ausreicht, die thermische Zersetzung des Diammoniumsulfates zu Ammoniumhydrogensulfat und Ammoniak zu bewirken, umfaßt, und durch die folgenden weiteren Stuffen gekennzeichnet ist:

(b) Einbringen des sich ergebenden Ammoniumhydrogensulfates in eine 10 bis 45 Gew.-% $H_2O$, 41 bis 74 Gew.-% $SO_4^{--}$, 0,1 bis 0,7 Gew.-% $H^+$ und 13,5 bis 15,5 Gew.-% $NH_4^+$ zur Bildung einer beladenen Lauge enthaltende Lôsung;

(c) Zusammenbringen der beladenen Lauge mit einem Lösungsmittel, welches im wesentlichen mit Wasser unmischbar ist und $H_2SO_4$ bevorzugter als Ammoniumsulfate extrahiert, wodurch $H_2SO_4$ selektiv aus der Lauge extrahiert wird und Ammoniumsulfate mit einem molaren Verhältnis von $NH_4^+$ zu $SO_4^{--}$ zwischen 1:1 und etwa 2:1 als Feststoffe aus der Lösung auskristallisieren; und

(d) Extraktion der mit $H_2SO_4$ beladenen Lösung mit Wasser zu einer Schwefelsäurelösung.

2. Verfahren nach Anspruch 1, dadurch gekennzeichnet, daß die auskristallisierten Ammoniumsulfat-Feststoffe aus der Stufe(c) aus

der Lauge abgetrennt werden und für die thermische Zersetzung nach Stufe(a) wiederaufbereitet werden.

3. Verfahren nach Anspruch 1 oder 2, dadurch gekennzeichnet, daß die aus der Stufe(c) übrigbleibende Lauge für die Verwendung in Stufe(b) wiederaufbereitet wird.

4. Verfahren nach einem der Ansprüche 1 bis 3, dadurch gekennzeichnet, daß die nach Stufe(d) übrigbleibende gewaschene Lösung für die Verwendung in Stufe (c) wiederaufbereitet wird.

5. Verfahren nach einem der Ansprüche 1 bis 4, dadurch gekennzeichnet, daß die thermische Zersetzung von Diammoniumsulfat bei einer Temperatur von 250°C bis 450°C durchgeführt wird.

6. Verfahren nach einem der Ansprüche 1 bis 5, dadurch gekennzeichnet, daß das Ammoniumhydrogensulfat mit der Lauge in Stufe (b) bei einer Temperatur zwischen 10°C und 130°C in Berührung gebracht wird.

7. Verfahren nach einem der Ansprüche 1 bis 6, dadurch gekennzeichnet, daß das in Stufe(c) verwendete Lösungsmittel (i) eine starke organische Säure, welche sowohl in der freien als auch in der Salzform öllöslich und in wesentlichen mit Wasser unmischbar ist, (ii) ein öllösliches Amin, welches sowohl in der freien als auch in der Salzform mit Wasser unmischbar ist, und (iii) ein Trägerlösungsmittel für die organische Säure und das Amin enthält, und daß das molare Verhältnis der organischen Säure zum Amin 1:4 oder 4:1 ist.

8. Verfahren nach einem der Ansprüche 1 bis 7, dadurch gekennzeichnet, daß die wiederaufbereitete Lauge 10 bis 30 Gew.-% $H_2O$, 58 bis 74 Gew.-% $SO_4^{--}$, 0,3 bis 0,7 Gew.-% $H^+$ und 14 bis 15 Gew.-% $NH_4^-$ enthält.

9. Verfahren nach einem der Ansprüche 1 bis 8, dadurch gekennzeichnet, daß das Diammoniumsulfat durch Umsetzen des Nebenproduktes Calciumsulfat von der Phosphorsäureproduktion mit Ammoniak und Kohlendioxid zu Calciumcarbonat und Diammoniumsulfat hergestellt wird.

10. Verfahren nach Anspruch 9, gekennzeichnet durch die weitere Verwendung der wiedergewonnenen Schwefelsäure in einem Herstellungsverfahren für Phosphorsäure, wobei das Verfahren auf die Herstellung des Calciumsulfat-Nebenproduktes hinausläuft.

**Revendications**

1. Une méthode pour la récupération d'acide sulfurique et d'ammoniaque à partir de sulfate de diammonium, comprenant:

(a) le chauffage du sulfate de diammonium à une température suffisante pour assurer la décomposition thermique du sulfate de diammonium en sulfate d'hydrogène d'ammonium et en ammoniaque; la méthode étant caractérisée par les opérations ultérieures suivantes:

(b) introduction de sulfate d'hydrogène d'ammonium résultant dans une solution comprenant 10 à 45 pour cent en poids de $H_2O$, 41 à 74 pour cent en poids de $SO_4^=$, 0,1 à 0,7 pour cent en poids de $H^+$ et de 13,5 à 15,5 pour cent en poids de $H_4^=$ afin de former une saumure chargée;

(c) mise en contact de ladite saumure chargée avec un solvant qui est rigoureusement non miscible à l'eau et qui extrait $H_2SO_4$ de préférence aux sulfates d'ammonium, $H_2SO_4$ étant ainsi extrait sélectivement de ladite saumure et les solides de sulfate d'ammonium ayant des rapports molaires de $NH_4^+$ à $SO_4^=$ allant de plus de 1:1 jusqu'à environ 2:1 cristallisant à partir de la solution; et

(d) extraction du solvant chargé de $H_2SO_4$ avec de l'eau de façon à obtenir une solution d'acide sulfurique.

2. Une méthode selon la revendication 1, caractérisé en ce que les solides de sulfate d'ammonium cristallisés à partir de l'opération (c) sont séparé de ladite saumure et recyclés pour la décomposition thermique selon la phase (a).

3. Une méthode selon la revendication 1 ou 2, caractérisée en ce que la saumure restant de l'opération (c) est recyclée pour utilisation dans l'opération (b).

4. Une méthode selon l'une quelconque des revendications 1 à 3 caractérisé en ce que le solvant lavé restant après l'opération (d) recyclé pour utilisation dans l'opération (c).

5. Une méthode selon l'une quelconque des revendication 1 à 4, caractérisée en ce que ladite décomposition thermique du sulfate de diammonium est effectuée à une température de 250°C à 450°C.

6. Une méthode selon l'une quelconque des revendications 1 à 5, caractérisée en ce que le sulfate d'hydrogène d'ammonium est mis en contact avec ladite saumure dans l'opération (b) à une température se situant entre 10°C et 130°C.

7. Une méthode selon l'une quelconque des revendications 1 à 6 caractérisée en ce que ledit solvant utilisé dans l'opération (c) comprend: (i) un acide organique fort qui est un huile soluble et rigoureusement non miscible à l'eau aussi bien sous forme libre que sous forme saline; (ii) une amine soluble dans l'huile qui est rigoureusement non miscible à l'eau aussi bien sous forme libre que sous forme saline; et (iii) un solvant porteur pour ledit acide organique et ladite amine, le méthode étant également caractérisée en ce que le rapport molaire entre ledit acide organique et ladite amine est de 1:4 à 4:1.

8. Une méthode selon l'une quelconque des revendications 1 à 7, caractérisé en ce que ladite saumure recyclée comprend de 10 à 30 pour cent en poids de $H_2O$, de 58 à 74 pour cent en poids de $SO_4^=$, de 0,3 à 0,7 pour cent en poids de $H^+$, et de 14 à 15 pour cent en poids de $NH_4^+$.

9. Une méthode selon l'une quelconque des revendications 1 à 8, caractérisée en ce que ledit sulfate de diammonium est produit en faisant réagir du sulfate de calcium de sous-produit provenant de la fabrication d'acide phosphorique

avec de l'ammoniaque et du gaz carbonique, afin de produire du carbonate de calcium et du sulfate de diammonium.

10. Une méthode selon la revendication 9, caractérisée par l'utilisation ultérieure de l'acide sulfurique récupéré dans un procédé de fabrication pour l'acide phosphorique, ledit procédé résultant en la production dudit sous-produit sulfate de calcium.